Europäisches Patentamt

(19) European Patent Office

Office européen des brevets

(11) Numéro de publication : **0 132 163**
**B1**

(12) **FASCICULE DE BREVET EUROPÉEN**

(45) Date de publication du fascicule du brevet :
11.02.87

(51) Int. Cl.⁴ : **G 01 L   5/16,** G 01 L   5/22

(21) Numéro de dépôt : **84400891.2**

(22) Date de dépôt : **03.05.84**

(54) **Capteur de mesure des composantes de la force et du moment équivalant à un système de forces appliquées.**

(30) Priorité : **06.05.83 FR 8307957**

(43) Date de publication de la demande :
**23.01.85 Bulletin 85/04**

(45) Mention de la délivrance du brevet :
**11.02.87 Bulletin 87/07**

(84) Etats contractants désignés :
**BE DE FR GB IT SE**

(56) Documents cités :
**EP-A- 0 023 864**
**FR-A- 2 124 790**
**FR-A- 2 281 560**
**GB-A- 2 096 777**
**US-A- 4 138 884**
**LE NOUVEL AUTOMATISME, vol. 23, no. 11, novembre 1978, pages 315-327, Paris, FR; M. FERRETTI: "Le dossier de la robotique industrielle: vers la génération 3"**

(73) Titulaire : **HISPANO-SUIZA Société anonyme dite:**
**333, Bureaux de la Colline**
**F-92213 Saint Cloud (FR)**

(72) Inventeur : **Fraignier, Bernard**
**10, rue des Capucines**
**F-93250 Villemomble (FR)**
Inventeur : **Gery, Daniel Edouard**
**17, rue de la Côte Saint Rémy**
**F-95240 Cormeilles-en-Parisis (FR)**

(74) Mandataire : **Moinat, François**
**S.N.E.C.M.A. Service des Brevets Boîte Postale 81**
**F-91003 Evry Cedex (FR)**

**0 132 163**

## Description

L'invention concerne un capteur de torseur de forces constituant une liaison entre deux corps solides, du type comprenant une première pièce destinée à être liée rigidement au premier corps, et une seconde pièce destinée à être liée rigidement au second corps, la première et la seconde pièce étant connectées par des moyens de connexion associés à des capteurs de forces captant toutes les forces permettant la détermination des forces constituant un torseur équivalent au torseur des forces appliquées, les moyens de connexion comprenant une pluralité de lames élastiques respectivement dans une seule direction sensible privilégiée et rigides dans les autres directions.

Le brevet français 2 281 560 fait connaître un tel capteur dans lequel les moyens de connexion comportent essentiellement quatre bras partant du moyeu constituant la première pièce et reliée au boîtier constituant la seconde pièce de manière telle que la mesure des déplacements latéraux tangentiels de quatre points liés par des croisillons au moyeu et des déplacements longitudinaux de quatre autres points également liés au moyeu par une bride fournit des indications permettant la détermination des six composantes de force et de moment du torseur réduit en un point. Cette solution donne lieu à une réalisation technologique relativement complexe.

Le but de l'invention est de proposer un capteur de construction simple fournissant des mesures de forces particulièrement bien définies et dégagées d'interférences nuisibles de manière à permettre la détermination simple et sûre des forces constituant un torseur équivalent au torseur des forces appliquées.

Selon l'invention, ce but est atteint du fait que les moyens de connexion consistent en un premier ensemble d'au moins trois premières lames et un second ensemble de secondes lames en même nombre, les première et seconde lames étant encastrées respectivement dans la première et la seconde pièce à une de leurs extrémités, chaque première lame étant respectivement liée à une seconde lame de façon telle que la direction sensible de la première lame soit orthogonale à la direction sensible de la seconde lame par une liaison sélective qui ne transmet que les efforts se décomposant selon l'une et/ou l'autre des directions sensibles orthogonales des lames associées, des capteurs de déformation étant associés aux lames et reliés à des appareils de mesures pour déterminer les forces appliquées dans la direction sensible des lames et permettre la détermination des forces constituant un torseur équivalent au torseur des forces appliquées à l'un des corps et la déduction du torseur réduit en un point.

La liaison sélective de deux lames associées peut être réalisée par une rotule coulissante (par exemple par une sphère liée à une lame coulissant dans un cylindre lié à l'autre lame selon une direction orthogonale aux directions sensibles des deux lames), par un cardan muni d'un élément de coulissement, etc...

Il est avantageux, pour le calcul du torseur comme pour la facilité de réalisation du capteur, que les secondes lames soient contenues dans des plans parallèles entre eux, et même confondues dans un même plan (compte non tenu des microdéplacements qu'elles subissent en cours de mesure).

Selon un mode de réalisation préféré pour certaines applications, les premières lames ont même longueur, sont au nombre de trois, disposées radialement, de préférence à 120° autour d'un moyeu constituant la première pièce. La seconde pièce affecte la forme d'un anneau plat comportant les plots sur lesquels les secondes lames, de même longueur, s'encastrent parallèlement à l'anneau. Les capteurs de déformations sont de préférence des jauges de contraintes.

Pour certaines applications, il peut être préférable que la première et la seconde pièce affectent la forme d'axes arbrés qui peuvent venir en prolongement l'un de l'autre, les première et seconde lames, de même longueur respectivement, s'encastrant à une de leurs extrémités sur chaque axe arbré respectivement. Dans ce cas chaque première et seconde lame peuvent être associées à leur autre extrémité, chacune avec une rotule coulissante.

Selon un autre mode de réalisation qui peut être avantageux par ses facilités d'assemblage mécanique et les commodités de réalisation des liaisons électriques aux appareils de mesure, les première et seconde lames, respectivement au nombre de trois, de même longueur, sont disposées radialement à 120° autour de deux moyeux superposés constituant respectivement la première et la seconde pièce dans lesquelles une extrémité de chaque lame est respectivement encastrée, les lames étant associées par deux, une première et une seconde lame, par une liaison sélective comportant une seule rotule et son logement.

Ce dernier mode de réalisation est particulièrement bien adapté pour les applications où une miniaturisation est recherchée.

Selon le mode de réalisation choisi, il se peut que l'une au moins des lames soit dédoublée en deux demi-lames séparées.

L'invention sera mieux comprise grâce à la description qui va suivre faite en référence aux dessins annexés sur lesquels :

la figure 1 est un schéma montrant les forces mesurées dans un type préféré de capteur conforme à l'invention et permettant une réalisation mécanique et une composition de torseur de forces équivalent facilement exploitable ;

la figure 2 est une vue partielle en perspective d'un premier mode de réalisation préféré de capteur

2

conforme à l'invention ; ·

la figure 3 est une vue en coupe parallèle à une première lame d'une liaison sélective conforme à l'invention ;

les figures 4a et 4b sont des schémas analogues à la figure 1 pour deux modes de réalisation particuliers ;

les figures 5A, 5B, 5C sont des vues schématiques d'un mode de réalisation d'un circuit de mesure associé au capteur conforme à l'invention ;

la figure 6 est une vue en coupe d'un troisième mode de réalisation conforme à l'invention ;

la figure 7 est une vue partielle en perspective analogue à la figure 2 d'un quatrième mode de réalisation conforme à l'invention.

L'invention vise à fournir, par une mesure, des éléments permettant la détermination de forces constituant un torseur équivalent au torseur des forces appliquées à un corps solide, et corrélativement, la détermination de leur torseur réduit en un point choisi.

Selon l'invention, les deux corps sont reliés par trois attaches non alignées supposées ponctuelles et transmettant donc des forces (à l'exclusion de couples), ces attaches étant réalisées de manière qu'un des trois paramètres définissant chaque force de liaison soit connu. Dès lors, la mesure des deux paramètres restant pour chaque force de liaison fournit six paramètres qui permettent, moyennant la connaissance des positions spatiales des attaches, de calculer les six paramètres définissant le torseur réduit.

Plus précisément, selon l'invention, les attaches sont conçues de manière à permettre la mesure immédiate aux moyens de lames souples de deux composantes orthogonales de chaque force de liaison, la troisième étant nulle par construction.

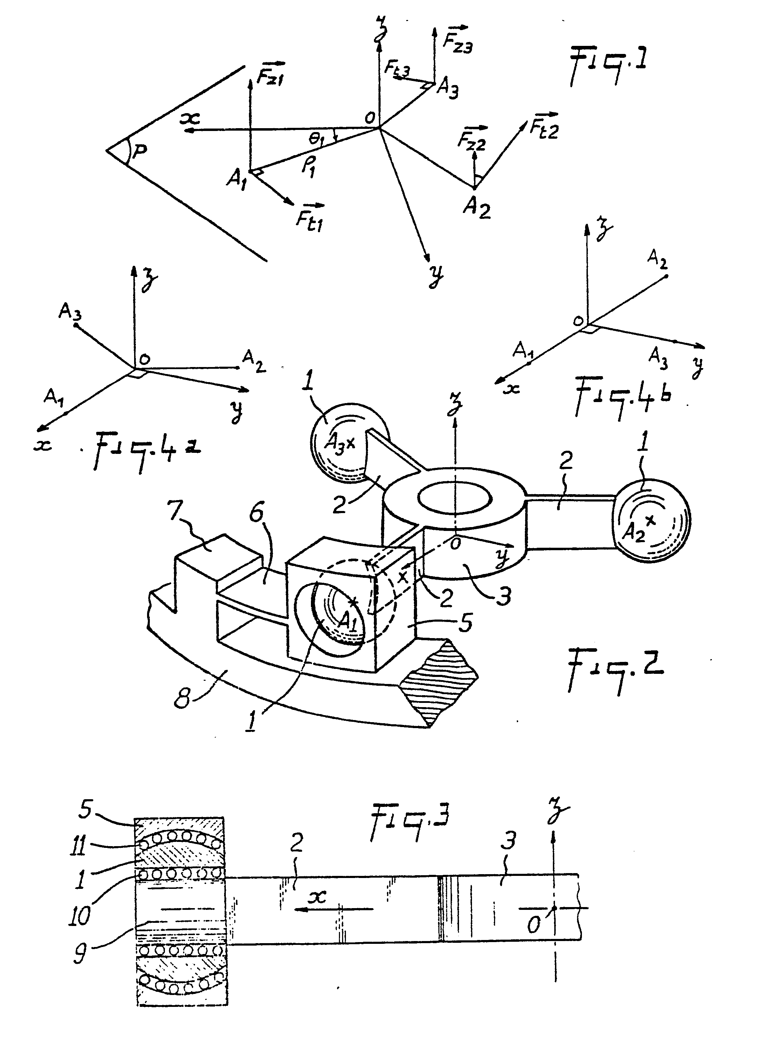

La figure 1 schématise une conception selon laquelle les composantes mesurées des forces de liaison sont agencées de manière à permettre un calcul relativement simple des paramètres du torseur réduit.

Si $A_1$, $A_2$, et $A_3$ désignent les trois attaches et P le plan qui les contient, on choisit un référentiel trirectangle Oxyz tel que Oxy soit confondu avec P. Les attaches $A_i$ sont conçues mécaniquement de manière que les forces de liaison soient exclusivement contenues dans les plans passant par $A_i$ et perpendiculaires à $OA_i$, chaque force pouvant être aisément caractérisée par la mesure d'une composante normale $Fz_i$, parallèle à Oz, et d'une composante tangentielle $Ft_i$, contenue dans P. Si $(\rho_i, \theta_i)$ sont les coordonnées polaires, dans xOy, de $A_i$, il est facile de calculer les six paramètres du torseur équivalent dans le référentiel Oxyz, à savoir les composantes suivant Ox, Oy, Oz du vecteur force équivalent :

(1) : $\qquad - (\vec{Ft_1} \sin \theta_1 + Ft_2 \sin \theta_2 + \vec{Ft_3} \sin \theta_3)$

(2) : $\qquad \vec{Ft_1} \cos \theta_1 + \vec{Ft_2} \cos \theta_2 + \vec{Ft_3} \cos \theta_3$

(3) : $\qquad \vec{Fz_1} + \vec{Fz_2} + \vec{Fz_3}$

et du vecteur couple équivalent

(4) : $\qquad \vec{Fz_1} \rho_1 \sin \theta_1 + \vec{Fz_2} \rho_2 \sin \theta_2 + \vec{Fz_3} \rho_3 \sin \theta_3$

(5) : $\qquad (\vec{Fz_1} \rho_1 \cos \theta_1 + \vec{Fz_2} \rho_2 \cos \theta_2 + \vec{Fz_3} \rho_3 \cos \theta_3)$

(6) : $\qquad \vec{Ft_1} \rho_1 + \vec{Ft_2} \rho_2 + \vec{Ft_3} \rho_3$

A partir de ces données, le calcul du torseur équivalent dans tout autre repère est évidemment possible.

Si, pour simplifier encore, on choisit, selon un premier mode de réalisation,

$$\rho_1 = \rho_2 = \rho_3 = \rho \; ; \; \theta_1 = 0 \; ; \; \theta_2 = 120° \text{ et } \theta_3 = 240° \; ;$$

les paramètres respectifs du torseur deviennent :

(1') : $\qquad (\sqrt{3/2}) (\vec{Ft_3} - \vec{Ft_2})$

(2') : $\qquad \vec{Ft_1} - (1/2) (\vec{Ft_2} + \vec{Ft_3})$

(3') : $\qquad \vec{Fz_1} + \vec{Fz_2} + \vec{Fz_3}$

(4') : $\qquad \rho(\sqrt{3/2}) (\vec{Fz_2} - \vec{Fz_3})$

(5') : $\qquad \rho((1/2) \vec{Fz_2} + (1/2) \vec{Fz_3} - \vec{Fz_1})$

(6') : $\qquad \rho(\vec{Ft_1} + \vec{Ft_2} + \vec{Ft_3})$

C'est cette conception simplifiée qui a été préférée pour la réalisation du capteur représenté en figure 2.

$A_1$, $A_2$, $A_3$ sont les centres de rotules sphériques 1 calées à l'extrémité de trois premières lames élastiques 2 radialement encastrées sur un moyeu 3 lié rigidement à un des corps solides à étudier par des moyens accessoires (par exemple un boulonnage, ou tout autre moyen connu).

Chaque rotule 1 coulisse radialement dans une douille d'un logement 5 (un seul a été représenté) supporté par chaque seconde lame 6 encastrée tangentiellement dans des plots 7 d'un anneau plat 8 lié rigidement au second corps solide.

Afin de minimiser les forces passives, il est utile d'améliorer au maximum la technologie de la liaison 2, 1, 5 par la réduction des rugosités antagonistes, le choix judicieux de matériaux ou de traitement des surfaces en regard ou l'utilisation d'interfaces adaptées comme représenté par exemple sur la figure 3 : l'extrémité de la lame 2 se termine par un cylindre 9 sur lequel la rotule 1 est montée par l'intermédiaire d'un fourreau à billes 10, la rotule 1 pouvant elle-même tourner dans une cavité sphérique du logement 5 par l'intermédiaire d'une sphère à billes 11.

Chacune des lames est équipée de jauges de contrainte judicieusement placées suivant les techniques d'exploitation propres à celles-ci en exploitant le cas échéant les configurations qui permettent d'insensibiliser le système aux variations de l'ambiance (en admettant l'isothermie de chacune des lames).

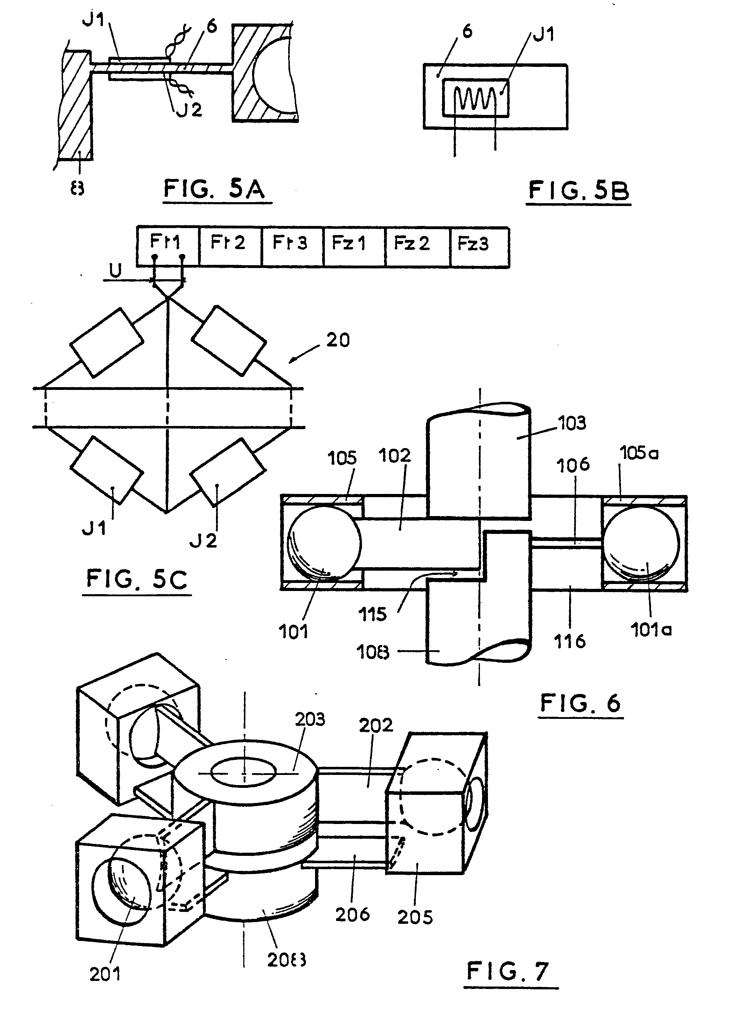

Aux figures 5A et 5B, on a représenté schématiquement à titre d'exemple une lame telle que 6 équipée sur chaque face d'une jauge de contrainte respectivement J1 et J2 collées sur la lame.

Les signaux analogiques tirés des jauges sont exploités par des moyens standards pour permettre facilement la détermination du torseur réduit à mesurer.

Ainsi, comme représenté schématiquement à la figure 5C, les deux jauges J1 et J2 sont reliées par des liaisons électriques aux sommets d'un pont de mesure tel que 20 qui délivre un signal analogique U dont la lecture sur un appareil de mesure permet après étalonnage de connaître une valeur de grandeur de force telle que Ft1. Un appareillage semblable permet de déterminer de même les différentes forces $Ft_2$, $Ft_3$, $Fz_1$, $Fz_2$, $Fz_3$.

Le choix de jauges répond au souci de disposer d'une mesure qui peut être conservée en mémoire, de préférence par exemple à des solutions de type piézoélectriques qui sont sensibles aux variations.

Au lieu de jauges de contrainte, d'autres moyens peuvent être utilisés pour mesurer les déformations des lames tels que, par exemple des méthodes optiques (par laser ou selon la méthode de Poggendorff), des sondes capacitives ou inductives de distance, un moyen de mesure métrologique (comparateur, par variation de cote).

L'encastrement des premières lames 2 dans un moyeu 3 peut être réalisé pratiquement par un serrage de pieds de lames de forme appropriée entre deux plateaux reliés par des moyens de vissage.

L'encastrement des secondes lames 6 sur des plots 7 comme le maintien de ces plots sur l'anneau 8 peut être réalisé par un simple boulonnage sur l'anneau.

A la figure 4a, on a représenté schématiquement dans une forme analogue à la figure 1 la conception correspondant au mode de réalisation de capteur qui a été décrit en référence à la figure 2.

Selon un second mode de réalisation dont la conception équivalente est représentée schématiquement à la figure 4b, les points $A_1$ et $A_2$ sont placés angulairement à 180° par rapport au point de référence 0, les coordonnées $\rho_1 = OA_1$ et $\rho_2 = OA_2$ étant de préférence égales, et le point $A_3$ étant placé angulairement à 90° respectivement par rapport aux points $A_1$ et $A_2$ selon la même référence.

Selon un troisième mode de réalisation dont la figure 6 représente une vue en coupe, un axe arbré 103 est lié à un des corps solides à étudier et un axe arbré 108 est lié au second corps solide. Ces axes sont placés dans le prolongement l'un de l'autre et comportent chacun à leur extrémité coopérante une partie échancrée en bout suivant une demi-section telle que représentée sur la figure en 115 pour l'axe 108. Les trois premières lames élastiques sont encastrées à une extrémité sur l'axe 103 et les trois secondes lames de même sur l'axe 108. Chaque lame, première 102 ou seconde 106, est respectivement prolongée par une rotule sphérique 101 ou 101a respectivement, à sa seconde extrémité. Chaque rotule 101 ou 101a coulisse radialement dans une douille d'un logement 105 ou 105a. Ces logements au nombre de six, trois logements 105 associés aux premières lames 102 et trois logements 105a associés aux secondes lames 106 sont disposés en couronne sur un anneau monobloc flottant 116.

La figure 7 montre un quatrième mode de réalisation dans une vue analogue à la figure 2. Comme dans le premier mode, des rotules sphériques 201 sont calées à une extrémité de trois premières lames élastiques 202 radialement encastrées à leur autre extrémité sur un premier moyeu 203 lié rigidement à un des corps solides à étudier. Chaque rotule 201 coulisse radialement dans une douille d'un logement 205 dans lequel est encastrée une extrémité d'une seconde lame 206. La seconde extrémité de chaque seconde lame 206 est encastrée sur un second moyeu 208 en superposition par rapport au premier moyeu 203 et lié rigidement au second corps solide.

Dans ces modes de réalisation, l'équipement de mesure et appareillage correspondant peut être identique à celui qui est utilisé dans le premier mode et qui a été décrit auparavant.

## Revendications

1. Capteur de torseur de forces constituant une liaison entre deux corps solides, du type comprenant une première pièce (3 ; 103 ; 203) destinée à être liée rigidement au premier corps, et une seconde pièce (8 ; 108 ; 208) destinée à être liée rigidement au second corps, la première et la seconde pièce étant connectées par des moyens de connexion (2, 1, 5, 6, 7 ; 102, 101, 105, 105a, 101a, 106 ; 202, 201, 205, 206) associés à des capteurs de forces captant toutes les forces permettant la détermination des forces constituant un torseur équivalent au torseur des forces appliquées, les moyens de connexion comprenant une pluralité de lames (2, 6 ; 102, 106 ; 202, 206) élastiques respectivement dans une seule direction sensible privilégiée et rigides dans les autres directions, caractérisé en ce que les moyens de connexion consistent en un premier ensemble d'au moins trois premières lames (2 ; 102 ; 202) et un second ensemble de secondes lames (6 ; 106 ; 206) en même nombre, les premières et secondes lames (2, 6 ; 102 ; 106 ; 202 ; 206) étant encastrées respectivement dans la première et la seconde pièce (3, 8 ; 103 ; 108 ; 203 ; 208) à une de leurs extrémités, chaque première lame (2 ; 102 ; 202) étant respectivement liée à une seconde lame (6 ; 106 ; 206) de façon telle que la direction sensible de la première lame (2 ; 102 ; 202) soit orthogonale à la direction sensible de la seconde lame (6 ; 106 ; 206) par une liaison sélective (1, 5 : 101 ; 105 ; 105a ; 101a ; 201 ; 205) qui ne transmet que les efforts se décomposant selon l'une et/ou l'autre des directions sensibles orthogonales des lames associées (2, 6 ; 102 ; 106 ; 202 ; 206) des capteurs de déformations étant associés aux lames (2, 6 ; 102 ; 106 ; 202 ; 206) et reliés à des appareils de mesures pour déterminer les forces appliquées dans la direction sensible des lames et permettre la détermination des forces constituant un torseur équivalent au torseur des forces appliquées à l'un des corps et la déduction du torseur réduit en un point.

2. Capteur selon la revendication 1, caractérisé en ce que l'une au moins des lames (2, 6 ; 102 ; 106 ; 202 ; 206) de l'un des ensembles de lames est dédoublée en deux demi-lames séparées.

3. Capteur selon l'une quelconque des revendications précédentes, caractérisé en ce que chaque liaison sélective (1, 5 ; 101 ; 105 ; 105a ; 101a ; 201 ; 205) est constituée par au moins une rotule coulissante.

4. Capteur selon l'une des revendications 1 et 2 caractérisé en ce que la liaison sélective comporte une seule rotule coulissante (1 ; 201) et son logement associé (5 ; 205).

5. Capteur selon l'une quelconque des revendications précédentes, caractérisé en ce que les secondes lames (6 ; 106 ; 206) sont sensiblement contenues dans des plans parallèles entre eux.

6. Capteur selon la revendication 5, caractérisé en ce que les secondes lames (6 ; 106 ; 206) sont sensiblement contenues dans un même plan.

7. Capteur selon l'une quelconque des revendications précédentes, caractérisé en ce que les premières lames (2 ; 202) sont disposées radialement autour d'un premier moyeu (3 ; 203) constituant la première pièce.

8. Capteur selon l'une quelconque des revendications 1, 2, 3, 5 et 6, caractérisé en ce que les premières lames (102) sont disposées radialement autour d'un axe arbré (103) constituant la première pièce.

9. Capteur selon l'une quelconque des revendications 6 à 8, caractérisé par trois premières lames (2 ; 102 ; 202) espacées angulairement de 120°.

10. Capteur selon la revendication 9, caractérisé par trois premières lames (2 ; 102 ; 202) de même longueur.

11. Capteur selon l'une quelconque des revendications 6 à 10, caractérisé en ce que les lignes moyennes respectivement d'une première lame (102, 202) et d'une seconde lame (106 ; 206) sont situées dans un même plan.

12. Capteur selon l'une quelconque des revendications 6, 7, 9 et 10 caractérisé en ce que les lignes moyennes respectivement d'une première lame (202) et d'une seconde lame (206) associées sont situées dans un même demi-plan limité par l'axe géométrique de symétrie du capteur.

13. Capteur selon les revendications 6 et 7, caractérisé en ce que les deux premières lames (2) sont placées angulairement à 180° et une troisième première lame (2) est placée angulairement à 90° par rapport à chacune des autres respectivement.

14. Capteur selon la revendication 10, caractérisé en ce que la seconde pièce affecte la forme d'un anneau plat (8) parallèle aux secondes lames (6) et comportant des plots (7) d'encastrement desdites secondes lames (6), lesquelles sont de même longueur.

15. Capteur selon la revendication 11, caractérisé en ce que la seconde pièce affecte la forme d'un axe arbré (108) dans lequel est encastrée une extrémité respectivement desdites secondes lames (106), lesquelles sont de même longueur.

16. Capteur selon les revendications 11 et 15 caractérisé en ce que les logements (105, 105a) des rotules coulissantes (101, 101a) formant les liaisons sélectives constituent une couronne sous forme d'un anneau comportant six logements (105, 105a).

17. Capteur selon la revendication 12, caractérisé en ce que les secondes lames (206) sont disposées radialement autour d'un second moyeu (208) constituant la seconde pièce, lesdites secondes lames (206) étant de même longueur.

18. Capteur selon l'une quelconque des revendications précédentes, caractérisé en ce que les capteurs de déformations sont des jauges de déformations.

**Claims**

1. Sensor torsion forces forming a connection between two rigid bodies, of the type comprising a first member (3 ; 103 ; 203) intented to be rigidly connected to the first body, and a second member (8 ; 108 ; 208) intented to be rigidly connected to the second body, the first and the second member being connected by connection means (2, 1, 5, 6, 7 ; 102, 101, 105, 105a, 101a, 106 ; 202, 201, 205, 206) associated with force sensors sensing all the forces enabling the determination of the forces enabling the determination of the forces constituting a torque equivalent to the torque of the forces applied, the connection means comprising a plurality of resilient blades (2, 6 ; 102, 106 ; 202, 206) respectively flexible substantially in a sole preferred direction and rigid in other directions, characterized in that the connection means consists in a first assembly of at least three blades (2 ; 102 ; 202) and a second assembly of second blades (6 ; 106 ; 206) the same in number, the first and the second blades (2, 6 ; 102 ; 106 ; 202 ; 206) being respectively embedded in the first and the second member (3, 8 ; 103 ; 108 ; 203 ; 208) at one of their ends, each first blade (2 ; 102 ; 202) being respectively connected to a second blade (6 ; 106 ; 206) so that the flexible direction of the first blade (2 ; 102 ; 202) will be orthogonal to the flexible direction of the second blade (6 ; 106 ; 206) by a selective connection (1, 5 ; 101 ; 105 ; 105a ; 101a ; 201 ; 205) which only transmits the forces resolved in the one and/or the other of substantially orthogonal directions of the associated blades (2, 6 ; 102 ; 106 ; 202 ; 206) deformation sensors being associated with the blades (2, 6 ; 102 ; 106 ; 202 ; 206) and connected to measuring apparatus in order to determine the forces applied in the flexible direction of the blades and enabling the determination of forces constituting a torque equivalent to the torque of the forces applied to one of the bodies and the deduction of the reduced torque at one point.

2. Sensor according to claim 1, characterized in that one at least of the blades (2, 6 ; 102 ; 106 ; 202 ; 206) of one of the assemblies of blade is divided to form two separate semi-blades.

3. Sensor according to any one of the preceding claims, characterized in that each selective connection (1, 5 ; 101 ; 105 ; 105a ; 101a ; 201 ; 205) is constituted by at least one sliding ball joint.

4. Sensor according to one of claims 1 and 2 characterized in that the selective connection comprises a sole sliding ball joint (1 ; 201) and its associated seating (5 ; 205).

5. Sensor according to any one of the preceding claims, characterized in that the second blades (6 ; 106 ; 206) are substantially contained within planes parallel thereto.

6. Sensor according to claim 5, characterized in that the second blades (6 ; 106 ; 206) are substantially contained in a common plane.

7. Sensor according to any one of the preceding claims, characterized in that the first blades (2 ; 202) are disposed radially about a first ring (3 ; 203) constituting the first member.

8. Sensor according to any one of claims 1, 2, 3, 5 and 6, characterized in that the first blades (102) are disposed radially about a shaft (103) constituting the first member.

9. Sensor according to any one of claims 6 to 8, characterized in three first blades (2 ; 102 ; 202) angularly spaced by 120°.

10. Sensor according to claim 9, characterized by three first blades (2 ; 102 ; 202) of the same length.

11. Sensor according to any one of claims 6 to 10 characterized in that the median lines respectively of a first blade (102, 202) and of a second blade (106 ; 206) are situated in a common plane.

12. Sensor according to any one of claims 6, 7, 9 and 10 characterized in that the respective median lines of a first blade (202) and of a second blade (206) associated therewith are situated in a commonsemiplane defined by the geometrical axis of symmetry of the sensor.

13. Sensor according to claims 6 and 7, characterized in that two first blades (2) are angularly displaced at 180° and a third first blade (2) is disposed angularly at 90° with respect to each of the others respectively.

14. Sensor according to claim 10, characterized in that the second member has the shape of a flat ring (8) parallel to the second blades (6) and comprising lugs (7) for embedding the second blades (6), with are of the same length.

15. Sensor according to claim 11, characterized in that the second member takes the shapes of a shaft (108) in which is embedded a respective end of the said second blades (106), which are of the same length.

16. Sensor according to claims 11 and 15 characterized in that the bearings (105, 105a) of the sliding ball joints (101, 101a) forming the selective connections constitutive an array in the form of an annulus comprising six seatings (105, 105a).

17. Sensor according to claim 12, characterized in that the second blades (206) are disposed radially about a second ring (208) constituting the second member, the said second blades (206) being of the same length.

18. Sensor according to any one of the preceding claims, characterized in that the deformation sensors are strain gauges.

**Patentansprüche**

1. Eine Verbindung zwischen zwei festen Körpern bildender Fühler zur Erfassung von Dynamen

**0 132 163**

(Kraftschrauben) mit einem mit dem ersten Körper fest verbindbaren ersten Teil (3 ; 103 ; 203), und einem mit dem zweiten Körper fest verbindbaren zweiten Teil (8 ; 108 ; 208), wobei das erste und das zweite Teil durch Verbindungsmittel (2, 1, 5, 6, 7 ; 102, 101, 105, 105a, 101a, 106 ; 202, 201, 205, 206) miteinander verbunden sind, die Kraftfühlern zugeordnet sind, welche alle Kräfte erfassen, die die Bestimmung der Kräfte ermöglichen, die eine zu der Dyname der angreifenden Kräfte äquivalente Dyname bilden, und wobei die Verbindungsmittel mehrere Platten (2, 6 ; 102, 106 ; 202, 206) umfassen, die jeweils in einer einzigen bevorzugten Empfindlichkeitsrichtung elastisch und in den anderen Richtungen starr sind, dadurch gekennzeichnet, daß die Verbindungsmittel aus einer ersten Gruppe von wenigstens drei ersten Platten (2 ; 102 ; 202) und einer zweiten Gruppe aus einer gleichen Anzahl von zweiten Blättern (6 ; 106 ; 206) gebildet sind, daß die ersten und die zweiten Platten (2, 6 ; 102, 106 ; 202, 206) mit einem ihrer Enden in dem ersten bzw. in dem zweiten Teil eingespannt sind, daß jede der ersten Platten (2 ; 102 ; 202) mit jeweils einer der zweiten Platten (6 ; 106 ; 206) durch eine selektive Verbindung (1, 5 ; 101, 105 ; 105a ; 201, 205) verbunden ist, die nur in der einen und/oder der anderen der beiden orthogonalen Empfindlichkeitsrichtungen der zugehörigen Platten (2, 6 ; 102, 106 ; 202, 206) zerlegbare Beanspruchungen überträgt, derart verbunden ist, daß die Empfindlichkeitsrichtung der ersten Platte (2 ; 102 ; 202) zur Empfindlichkeitsrichtung der zweiten Platte (6 ; 106 ; 206) orthogonal ist, und daß den Platten (2, 6 ; 102, 106 ; 202, 206) Verformungsaufnehmer zugeordnet sind, die mit zur Bestimmung der in der Empfindlichkeitsrichtung der Platten einwirkenden Kräfte dienenden Meßgeräten verbunden sind, die sie Bestimmung der Kräfte, die eine Dyname bilden, welche der Dyname der an einem der Körper angreifenden Kräfte äquivalent ist, und die Ableitung der in einen Punkt reduzierten Dyname ermöglichen.

2. Fühler nach Anspruch 1, dadurch gekennzeichnet, daß wenigstens eine der Platten (2, 6 ; 102, 106 ; 202, 206) einer der Gruppen von Platten in zwei Halbplatten unterteilt ist.

3. Fühler nach einem der vorgehenden Ansprüche, dadurch gekennzeichnet, daß jede der selektiven Verbindungen (1, 5 ; 101, 105 ; 105a, 101a ; 201, 205) von wenigstens einem Gleitkniestück gebildet ist.

4. Fühler nach einem der Ansprüche 1 und 2, dadurch gekennzeichnet, daß die selektive Verbindungen ein einziges Gleitkniestück (1 ; 201) und den zugehörigen (5 ; 205) Sitz umfaßt.

5. Fühler nach einem der vorgehenden Ansprüche, dadurch gekennzeichnet, daß die zweiten Platten (6 ; 106 ; 206) im wesentlichen in zueinander parallelen Ebenen liegen.

6. Fühler nach Anspruch 5, dadurch gekennzeichnet, daß die zweiten Platten (6 ; 106 ; 206) im wesentlichen in derselben Ebene liegen.

7. Fühler nach einem der vorgehenden Ansprüche, dadurch gekennzeichnet, daß die ersten Platten (2 ; 202) radial um eine erste Nabe (3 ; 203) angeordnet sind, die das erste Teil bildet.

8. Fühler nach einem der Ansprüche 1, 2, 3, 5 und 6, dadurch gekennzeichnet, daß die ersten Platten (102) radial um eine Achswelle (103) angeordnet sind, die das erste Teil bildet.

9. Fühler nach einem der Ansprüche 6 bis 8, dadurch gekennzeichnet, daß drei erste Platten (2 ; 102 ; 202) vorgesehen sind, die in Winkelabständen von 120° angeordnet sind.

10. Fühler nach Anspruch 9, dadurch gekennzeichnet, daß drei erste Platten (2 ; 102 ; 202) gleicher Länge vorgesehen sind.

11. Fühler nach einem der Ansprüche 6 bis 10, dadurch gekennzeichnet, daß die Mittellinien einer ersten Platte (102 ; 202) und einer zweiten Platte (106 ; 206) in derselben Ebene liegen.

12. Fühler nach einem der Ansprüche 6, 7, 9 und 10, dadurch gekennzeichnet, daß die Mittellinien einer ersten Platte (202) und einer dieser zugeordneten zweiten Platte (206) in derselben durch die geometrische Symmetrieachse des Fühlers begrenzten Halbebene liegen.

13. Fühler nach einem der Ansprüche 6 und 7, dadurch gekennzeichnet, daß zwei der ersten Platten (2) in einem Winkelabstand von 180° angeordnet sind und daß ein drittes Exemplar der ersten Platten im Winkelabstand von 90° von jeder der beiden anderen angeordnet ist.

14. Fühler nach Anspruch 10, dadurch gekennzeichnet, daß das zweite Teil die Form eines flachen Rings (8) hat, der parallel zu den zweiten Platten (6) angeordnet ist und Einspannstellen (7) für die zweiten Platten (6) besitzt, die gleiche Längen haben.

15. Fühler nach Anspruch 11, dadurch gekennzeichnet, daß das zweite Teil die Form einer Achswelle (108) hat, in der die zweiten Platten (106) jeweils mit einem Ende eingespannt sind, und daß die zweiten Platten (106) gleiche Länge haben.

16. Fühler nach Anspruch 11 und 15, dadurch gekennzeichnet, daß die Sitze (105, 105a) für die die selektiven Verbindungen bildenden Gleitkniestücke (101, 101a) einen Kranz in Form eines Ringes mit sechs derartigen Sitzen (105a) bilden.

17. Fühler nach Anspruch 12, dadurch gekennzeichnet, daß die zweiten Platten (206) radial um eine zweite Nabe (208) angeordnet sind, die das zweite Teil bildet, und daß die zweiten Platten (206) gleiche Länge haben.

18. Fühler nach einem der vorgehenden Ansprüche, dadurch gekennzeichnet, daß die Verformungsaufnehmer Verformungsfühler sind.

7

0 132 163

Fig.1

Fig.4a

Fig.4b

Fig.2

Fig.3

FIG. 5A

FIG. 5B

FIG. 5C

FIG. 6

FIG. 7

2